# EUROPÄISCHE PATENTANMELDUNG

(11) **EP 1 027 869 A2**
(43) Veröffentlichungstag der Anmeldung: **16.08.2000**
(21) Anmeldenummer: 00102742.4
(22) Anmeldetag: 10.02.2000
(51) Int. Cl.: A61C 13/08, B22D 18/04, B22D 21/00

(54) **Verfahren und Vorrichtung zum Herstellen prothetischen Zahnersatzes durch Giessen**

(30) Priorität: 12.02.1999 DE 19905923
(71) Anmelder: Sabath-Dental, 85049 Ingolstadt-Gerolfing (DE)
(72) Erfinder: Sabath, Andreas, 85049 Ingolstadt (DE)
(74) Vertreter: Canzler, Rolf, Dipl.-Ing.

(57) **Zusammenfassung**

Die Erfindung betrifft ein Verfahren und eine Vorrichtung zum Herstellen von prothetischem Zahnersatz durch Vergießen von Metall-Legierungen in Gießformen, die einen Hohlraum zur Aufnahme der Schmelze für den prothetischen Zahnersatz aufweisen sowie jeweils mindestens einen Einfülltrichter, von dem aus die Schmelze in Gießkanälen an verschiedene Stellen des zu gießenden prothetischen Zahnersatzes geleitet wird. Die im Hohlraum der Form eingeschlosssene Luft wird durch das Einschießen der Schmelze in geschlossene Zusatzhohlräume gedrückt, die außerhalb des für den prothetischen Zahnersatz vorgesehenen Hohlraumes liegen. An mindestens einem Zahn des zahnprothetischen Hohlraumes ist ein Zusatzhohlraum angeschlossen zur Aufnahme der durch das Einschießen der Schmelze in den zahnprothetischen Hohlraum verdrängten Luft.

## Beschreibung

In der Zahntechnik wird prothetischer Zahnersatz als festsitzende oder abnehmbare Nachbildung der zu ersetzenden Zähne aus Metall-Legierungen hergestellt, die dazu in eine Form gegossen werden, die einen geschlossenen Hohlraum darstellt. Die auf diese Weise aus den Legierungen gegossenen Gerüste oder Kronen werden anschließend mit Keramik oder Kunststoff verblendet. Diese Technik ist seit mehr als 40 Jahren bekannt und wird seit etwa 30 Jahren als Standardversorgung für den Zahnersatz verwendet.

Bei den Gießverfahren unterscheidet man im wesentlichen zwischen Schleuderguß und Vakuumdruckguß, wobei innerhalb des betreffenden Gießverfahrens noch unterschieden wird, wie die Erhitzung des Gießmaterials erfolgt. So spricht man beispielsweise von Flammenschleuderguß oder auch induktivem Schleuderguß sowie widerstandsbeheiztem Schleuderguß oder auch Vakuumdruckguß.

Bei den verschiedenen Gießverfahren tritt immer wieder das Problem auf, daß die Gieißergebnisse nicht genau reproduzierbar sind und Unterschiede und Toleranzen entstehen, die entweder das Gußergebnis unbrauchbar machen oder erhebliche Nacharbeit erfordern. Um nacharbeiten zu können, müssen erhebliche Zugaben gemacht werden. Dies bedingt mehr Materialeinsatz, was bei dem sehr wertvollen Material eine beträchtliche Verteuerung bedeutet. Es ist jedem Gießer an sich bekannt, daß die Legierung im flüssigen Zustand eine Volumenserweiterung erfährt und im Erstarrungsprozeß durch die Erkaltung wieder auf ein kleineres Volumen schrumpft. Dieses Schrumpfen wiederum ist abhängig von der Massierung des Materials, und es gehört sehr viel Know-how bei der Anwendung dazu, um brauchbare Gießergebnisse zu erzielen. Auf der anderen Seite spielt auch die Dichte und Gleichmäßigkeit des Gußgefüges eine entscheidende Rolle, um dieses lunkerfrei und dicht zu bekommen. Einen besonderen Einfluß hat hierbei das erforderliche Gießkanalsystem, um die flüssige Legierungsschmelze in den Hohlraum der Form zu verbringen. Diese Kanäle sind nicht nur wichtig für das Einfließen der Schmelze, sondern auch entscheidend für den Rückerstarrungseffekt der Schmelze bei der Erkaltung im Formhohlraum.

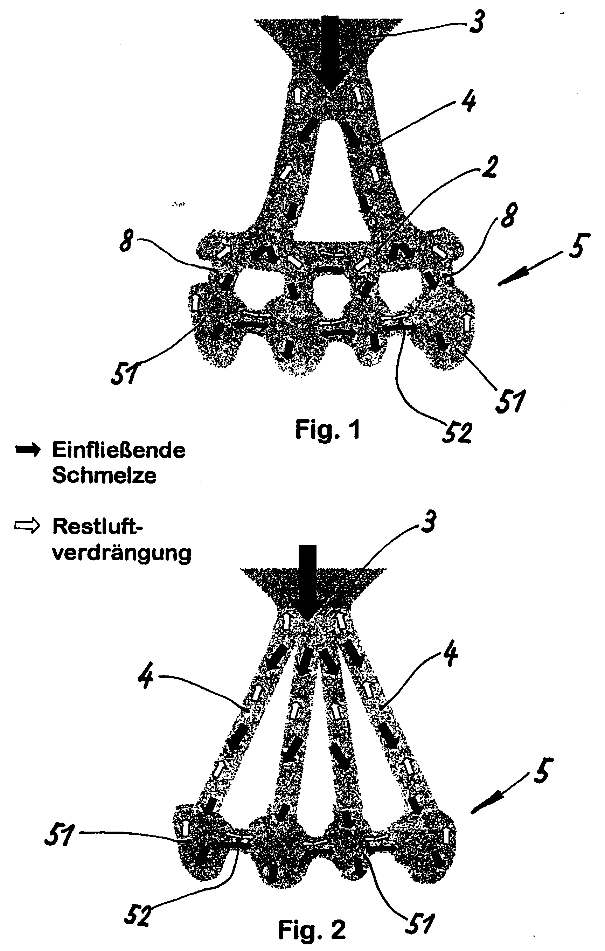

Bei den Gießkanalsystemen unterscheidet man zwischen dem sog. Balkenguß und der Einzelversorgung. Beim Balkenguß wird bei der Herstellung des Gießmodelles (Fig. 1) zunächst das prothetische Gerüst 5, das aus den einzelnen Zähnen 51 besteht, die als Kronen oder Zwischenglieder ausgebildet sein können, mittels Verbindungskanälen 8 mit dem Gußbalken 2 als Versorgungsvolumen verbunden. Der Gußbalken 2 als Versorgungsvolumen für die Rückerstarrung der Schmelze wird seinerseits mittels Gießkanälen 4 mit dem Gießtrichter 3 verbunden. Anschließend wird dieses aus Wachs aufgebaute Gießmodell in eine sog. Gießmuffel 1 eingesetzt und zur Herstellung der eigentlichen Gießform in Formmasse eingebettet und nach dem Abbinden des aufgefüllten Formmaterials im Vorwärmeofen auf die gewünschte Temperatur erwärmt. Dabei wird das aus Wachs aufgebaute Modell des prothetischen Gerüstes 5 mit den Gieß- und Verbindungskanälen 14 und 8 und dem Gußbalken 2 ausgeschmolzen, so daß der Hohlraum zur Aufnahme der Legierung entsteht.

Nach Erreichen der Vorwärmetemperatur wird die Legierung im Gießgerät erhitzt und die flüssige Schmelze in die Form vergossen, so daß damit der Hohlraum der Form ausgefüllt ist. Die einschießende flüssige Legierung bzw. Schmelze muß nun die im Gießhohlraum vorhandene Luft verdrängen. Beim Vakuumdruckguß erfolgt zwar eine Luftreduzierung durch den Unterdruck in der Gießkammer des Gießgerätes, es verbleibt aber noch ein erheblicher Restluftbestand in dem Formhohlraum. Dieser Restluftbestand kann nur zu einem sehr geringen Teil - erfahrungsgemäß zu ca. 5 bis 10 % - durch die sehr dichte Formmasse entweichen, so daß der größte Teil entgegen der Fließrichtung der Schmelze über das Gießkanalsystem zum Gießtrichter 3 sich seinen Weg suchen muß, um entweichen zu können. Es kommt hierbei zu Verwirbelungen und Behinderungen der einfließenden Schmelze.

Um dies zu verhindern, ist es bereits bekannt, sehr volumenstarke Gießkanalversorgungen zu wählen, was allerdings zu dem Nachteil führt, daß ein sehr hoher Legierungsmengeneinsatz benötigt wird. Dies bedeutet eine beträchtliche Verteuerung. Außerdem wird die Homogenität des Gußgefüges beeinträchtigt. Denn erst wenn die gesamte Restluft aus dem Formenhohlraum entwichen ist, kann sich die Schmelze homogen verdichten. Häufig entstehen unbrauchbare Fehlgüsse durch Lunker oder andere Einschlüsse im Guß. Die Folge ist, daß der Guß wiederholt werden muß mit seinem gesamten Herstellungsprozeß. Wenn die fehlerhafte Zahnprothese in den Mund des Patienten verbracht wird, kann sogar eine Schädigung durch Korrossion beim Patienten stattfinden.

Bei der Einzelversorgung (Fig. 2) entfällt der Gußbalken 2 mit den Verbindungskanälen 8, da jeder Zahn 51 des prothetischen Gerüstes 5 über einen separaten Gießkanal 4 direkt mit dem Gießtrichter 3 verbunden ist.

Auch hier muß die einschießende Schmelze die Restluft verdrängen, die sich durch das Gießkanalsystem gegen die Fließrichtung der Schmelze zum Gießtrichter 3 nach dem Prinzip der Schwerkraft ihren Weg suchen muß. Somit treten hier identische Probleme wie bei dem oben beschriebenen Balkengußverfahren auf.

Durch die DE 41 16 073 A1 ist eine geschlossene Entlüftung bekannt, die von relativ großem Volumen sein soll, um ein schnelles und ungestörtes Gießen zu erreichen und die Gase aus dem Bereich innerhalb der Form in die geschlossene Entlüftung zu drängen, während das Metall in die Form strömt. Diese bekannte, geschlossene Entlüftung ist jedoch unterhalb der prothetischen Form angeordnet, so daß beim Eingießen des Metalles die Luft entgegen der Schwerkraft sich ihren Weg durch die Metallschmelze bahnt, so daß es zu den eingangs genannten Nachteilen einer Verwirbelung und Behinderung der einfließenden Schmelze kommt.

Aufgabe der Erfindung ist es daher, diese Nachteile des Standes der Technik zu vermeiden und ein Gießverfahren sowie eine Vorrichtung zu schaffen, bei welchem eine befriedigende Entlüftung des Formhohlraumes erfolgt. Diese Aufgabe wird durch die Merkmale des Anspruchs 1 sowie des Anspruchs 8. gelöst.

Da bei dem erfindungsgemäßen Gießverfahren die Restluftbestände nicht durch das Gießkanalsystem entweichen müssen, sondern in einen zusätzlichen Hohlraum verdrängt werden, findet eine wesentliche schnellere Füllung statt. Außerdem kommt es nicht zu den extremen Verwirbelungen durch die im Gegenstrom entweichende Restluft. Einschlüsse, Lunkerbildungen oder unterschiedliche Gußgefüge werden dadurch vermieden, und es entsteht ein sehr gutes Gefüge durch die schnelle Füllung des Formenhohlraumes. Die Zusatzhohlräume dienen beim Einfließen der Schmelze zur Aufnahme der Luft aus dem Formhohlraum und beim Erstarren der Schmelze als Schmelzedepot für die dabei stattfindende Schmelzewanderung, so daß auch eine optimale Erstarrungsschwindung zum Zentrum des Gusses gerichtet stattfinden kann. Auf diese Weise wird ein lunkerfreier Guß erzeugt. Das Verfahren arbeitet äußerst sparsam, da durch das erfindungsgemäße Gießkanalsystem die zu verwendende Metallmenge durch die gezielt vorgesehenen Schmelzedepots beschränkt ist. Außerdem können schwächere Gießkanäle verwendet werden, so daß sich auch dadurch Materialeinsparungen ergeben. Weitere Einzelheiten der Erfindung werden anhand der Zeichnungen beschrieben. Es zeigen
- Figuren 1 und 2: Gießverfahren gemäß dem Stand der Technik mit gegenströmender, verdrängter Restluft
- Figuren 3 und 5: ein Modell eines prothetischen Gerüstes gemäß der Erfindung
- Figur 4: ein anderes Modell eines prothetischen Gerüstes gemäß der Erfindung mit erweiterten Gießkanälen
- Figuren 6, 7, 8 und 9: verschiedene Gießkanäle als vorgefertigte Modellteile und ihre Abmessungen

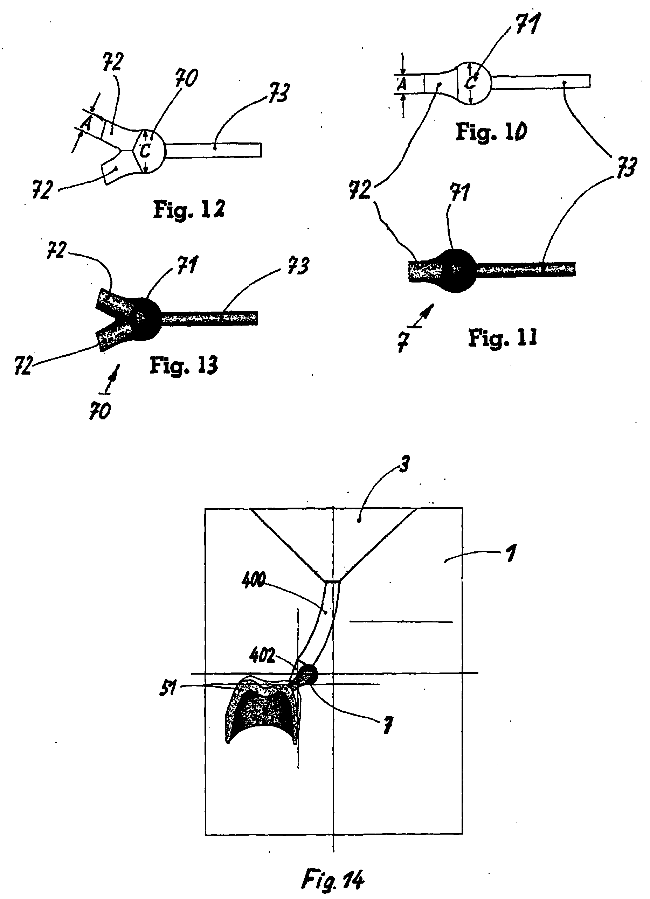

- Figuren 10, 11, 12 und 13: verschiedene Zusatzhohlräume als vorgefertigte Modellteile und ihre Abmessungen
- Figur 14: die Anordnung des Formenhohlraumes gemäß Fig. 3 in der Gießmuffel in geschnittener Seitenansicht

Bei dem üblichen Balkengußverfahren (Figur 1) wird die Schmelze in den Gießtrichter 3 eingefüllt und über die Gießkanäle 4 zunächst in den Gußbalken 2 eingebracht, von welchem aus sie auf das prothetische Gerüst 5 über Verbindungskanäle 8 verteilt wird. Wie anhand der verschiedenen Pfeile ersichtlich gemacht, strömt die Schmelze (schwarzer Pfeil) in die Hohlräume ein und verdrängt dort die Luft, die keine andere Möglichkeit hat, als entgegen dem Schmelzefluß aus den Hohlräumen zu entweichen (weißer Pfeil). Dies führt zu Verwirbelungen, so daß Einschlüsse oder Gußlunker entstehen können. Figur 2 zeigt eine Einzelversorgung, bei der jeder einzelne Zahn 51 des prothetischen Gerüstes 5 über einen separaten Gießkanal 4 mit dem Gießtrichter 3 verbunden ist. Die einzelnen Zähne 51 des prothetischen Gerüstes 5 sind untereinander über Verbindungsglieder 52 miteinander verbunden. Trotz dieser Einzelversorgung begegnen sich in jedem der Gießkanäle 4 die einfließende Schmelze und die ihr entgegenströmende, verdrängte Luft aus dem Formhohlraum 5, so daß die negativen Erscheinungen auftreten, wie oben bereits geschildert.

Bei dem erfindungsgemäßen Gießverfahren wird der Gegenstrom der verdrängten Luft in den Gießkanälen 40 und 400 vermieden. Auf das prothetische Gerüst 5 sind im Wechsel mit Gießkanälen 40 und 400 auf jeden Zahn Zusatzhohlräume 7 oder auch 70 aufgesetzt, die die verdrängte Luft aufnehmen können. Die Schmelze wird in den Gießtrichter 3 eingegossen, gelangt durch den Gießkanal 400 in das prothetische Gerüst 5, in welchem sich über die Verbindungsglieder 52 die Schmelze auf die benachbarten Zähne 51 des prothetischen Gerüstes 5 verteilt. Die dort eingeschlossene Luft wird in die Zusatzhohlräume 7 bzw. 70 gedrückt, die entgegen der Richtung der Schwerkraft angeordnet und geschlossen sind, so daß auch eine gewisse Verdichtung dieser Luft eintritt, die auf die Schmelze rückwirkt. Diesen Zusatzhohlräumen 7 ist eine bestimmte, auf den Rauminhalt der Form abgestimmte Größe gegeben, um die verdrängte Luft aufnehmen zu können. Es werden deshalb je nach Größe des Formhohlraumes 5 verschiedene Größen dieser Zusatzhohlräume 7 verwendet, wie unten noch näher beschrieben. In diesen Zusatzhohlräumen 7 wird die Luft verdichtet durch den Gießdruck, so daß ein Luftpolster geschaffen wird und deshalb diese Zusatzhohlräume 7 nur wenig nachströmende Schmelze aufnehmen. Dadurch ist die Metallmenge im wesentlichen auf das prothetische Gerüst 5 beschränkt, und es entsteht wenig Abfall.

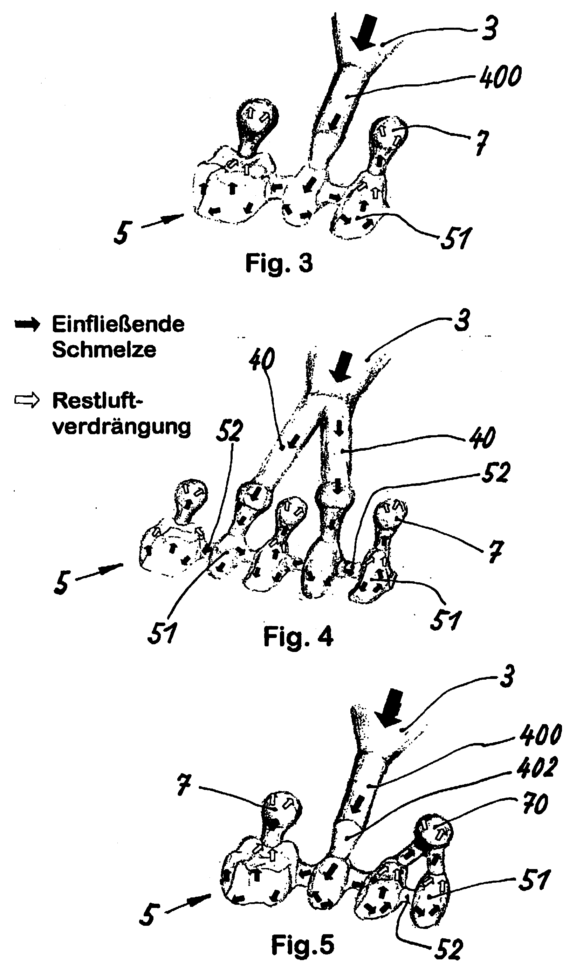

Eine gewisse Metallmenge muß jedoch nachströmen, damit genügend Schmelze für die Erstarrungsschwindung zur Verfügung steht. Diese Zusatzhohlräume 7 bzw. 70 dienen somit nicht nur zur Luftevakuierung, sondern auch als Schmelzedepot für die beim Erstarren stattfindende Schmelzewanderung. Es ist deshalb auch wichtig, daß diese Zusatzhohlräume 7, aber auch die Gießkanäle 40, 400 richtig in der Gießmuffel 1 positioniert werden, damit bei der Erstarrungsschwindung der Schmelze genügend Schmelzedepot vorhanden ist, um einen Gußverzug zu vermeiden. Wie beispielsweise in Figur 14 gezeigt, ist der Gießtrichter 3 zentrisch in der Gießmuffel 1 angeordnet, während der Zahn 51 des prothetischen Gerüstes 5 seitlich außen angeordnet ist. Der Zusatzraum 7 ist entgegen der Richtung der Steuerkraft angeordnet, so daß die Luft in diesem aufsteigt, verdrängt durch die schwerere Schmelze aus dem Formhohlraum 51. Sowohl der Gießkanal 400 als auch der Zusatzraum 7 ist zum Zentrum der Gießmuffel 1 hin angeordnet. Durch diese Anordnung erstarrt der Zahn 51 früher als der Gießkanal 400 und der Zusatzhohlraum 7, so daß letztere als Schmelzedepot dienen können und beim Erstarren der Schmelze im Zahn 51 zum Ausgleich des Schwundes Schmelze nachwandern kann. Figur 14 ist eine Seitensicht des Modells von Figur 3 im Schnitt, eingeformt in die Gießmuffel 1, so daß der Gießkanal 400 teilweise durch den Zusatzhohlraum 7 verdeckt ist.

Zweckmäßigerweise wird die Schmelze einem Zahn 51 zugeführt, der zwischen zwei Zähnen 51 angeordnet ist, die jeweils an Zusatzhohlräume 7 angeschlossen sind, so daß im Wechsel ein Gießkanal 40 bzw. 400 und ein Zusatzhohlraum 7 angeordnet sind.

Figur 4 zeigt das erfindungsgemäße Gießverfahren für die Anwendung bei der Schleudergußmethode. Wie aus den Figuren 3 und 5 (Vakuumdruckguß) im Vergleich zu Figur 4 (Schleuderguß) ersichtlich, werden vorzugsweise unterschiedliche Gießkanäle 40 und 400 für Schleuderguß und für Vakuumdruckguß verwendet. Grundsätzlich hat es sich jedoch als zweckmäßig erwiesen, die Schmelze unmittelbar vor dem Eintritt in den zahnprothetischen Hohlraum 5 trichterartig zusammenzufassen. Bein Schleuderguß (Fig. 4) sollte jedoch vor der trichterförmigen Mündung 42 des Gießkanals 40 noch eine Erweiterung 41 des Gießkanales 40 vorgesehen sein, die vorzugsweise kugelförmig ausgebildet ist. Selbstverständlich kann diese Erweiterung auch eine andere Form aufweisen. Sie muß nur so geformt sein, daß die in ihr aufgenommene Schmelze möglichst spät erstarrt, damit diese zum Ausgleich der Erstarrungsschwindung in den Formhohlraum 5 noch nachfließen kann.

Diese Erweiterung 41, die sich dann wieder, ähnlich wie bei dem Kanal 400 für Vakuumdruckguß, trichterförmig zum prothetischen Gerüst 5 hin verjüngt, hat sich beim Schleudergießverfahren als notwendig erwiesen, um durch dieses Schmelzedepot die Erstarrungsschwindung ausgleichen zu können, da durch die Bewegung der Schleuder ein Ventilationseffekt entsteht, der die Gießmuffel 1 sehr schnell abkühlen läßt.

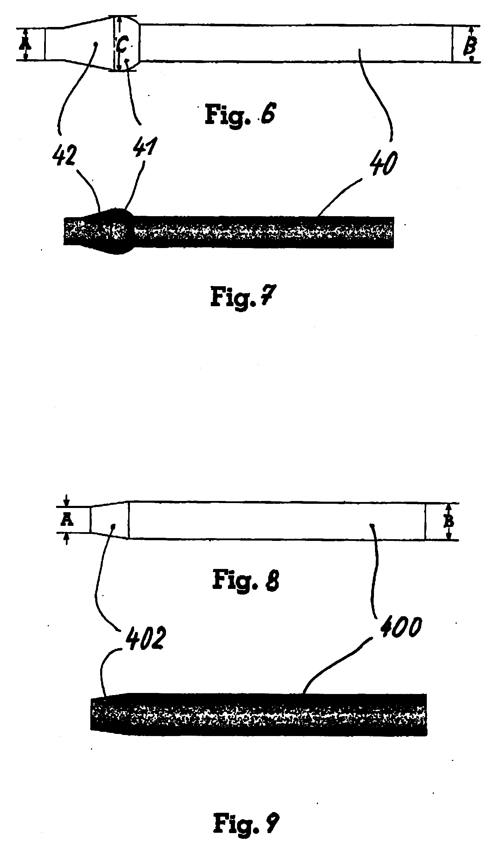

Diese Gießkanäle 40 mit der kugelförmigen Erweiterung 41 als Schmelzedepot werden in verschiedenen Stärken vorgesehen, abhängig von der jeweiligen Stärke des prothetischen Gerüstes 5. Wie aus den Figuren 6 und 7 hervorgeht, besteht das Schmelzedepot im wesentlichen aus einer kugelförmigen Erweiterung 41 des Gießkanals 40, wobei vom maximalen Durchmesser C der Erweiterung 41 bis zur Anschlußstelle an das prothetische Gerüst 5 eine trichterförmige Mündung 42 vorgesehen ist, die sich auf den Mündungsdurchmesser A verjüngt. Die Erweiterung 41 beträgt etwa das 1,7- bis 2,3-Fache, wenn man den Durchmesser C der Erweiterung 41 zu dem Durchmesser A der trichterförmigen Mündung 42 ins Verhältnis setzt.

Auch bei den für das Schleudergießverfahren mit einer Erweiterung 41 vorgesehenen Gießkanälen 40 hat sich als zweckmäßig erwiesen, daß die trichterförmige Zusammenfassung der Schmelze bis unmittelbar vor den zahnprothetischen Hohlraum erfolgt und zwar zweckmäßig in einen Verhältnis 1,15 bis 1,6 gegenüber dem Gießkanaldurchmesser B.

Die Figuren 8 und 9 zeigen beispielsweise einen Gießkanal 400, wie er vorzugsweise für Vakuumdruckguß angewendet wird. Auch hier erfolgt eine Zusammenfassung der Schmelze vor dem zahnprothetischen Hohlraum 5 (Figur 3 und Figur 5). Diese Kanäle 400 werden in verschiedenen Stärken und mit verschiedenen Mündungsverjüngungen 402 vorgesehen, angepaßt auf die Größe des zu gießenden Zahnes 51 als Krone oder Zwischenglied. Die Stärke des Gießkanals 400 oder auch 40 wird in Abhängigkeit der Menge der zu vergießenden Schmelze durch seinen Durchmesser B so gewählt, daß der Fließwiderstand möglichst klein ist. Es empfiehlt sich jedoch, die Stärke des Gießkanales so gering wie möglich zu halten, um unnötige Materialverluste zu vermeiden. Durch den fehlenden Gegenstrom der Luft können die bisher üblichen Gießkanalstärken in jedem Fall unterschritten werden.

Die als Trichter ausgebildete Mündung 402 des Gießkanals 400 verjüngt sich zum prothetischen Gerüst hin auf einen Durchmesser A, der vorteilhafter Weise eine Zusammenfassung der Schmelze im Verhältnis 1,3 bis 1,8 bewirkt, bezogen auf den Gießkanaldurchmesser B. Dadurch wird einerseits das Abtrennen erleichtert, andererseits findet eine Schmelzestabilisierung durch den Düseneffekt des Trichters statt.

Die Gießkanäle 40 und 400 gemäß den Figuren 6 bis 9 werden zweckmäßig als aus Wachs vorgefertigte Teile hergestellt, die dann mit dem prothetischen Gerüst 5 und dem Eingießtrichter 3 zum Gießmodell zusammengesetzt und in die Gießmuffel 3 eingebracht werden.

Wie aus den Figuren 3, 4 und 5 hervorgeht, sind auf den einzelnen Zähnen 51 des prothetischen Gerüstes 5 Zusatzhohlräume 7 aufgesetzt, wobei gemäß Figur 5 auch ein Zusatzhohlraum 70 zwei Teilen 51 des prothetischen Gerüstes 5 zugeordnet sein kann. Ein solcher Zusatzhohlraum 7 ist birnenförmig ausgebildet und besteht aus einem kugeligen Teil 71 mit dem Durchmesser C und dem Birnenhals 72, der mit seinem offenen Ende an das prothetische Gerüst 5 angeschlossen ist. Dieses offene Ende des Birnenhalses 72 weist einen Durchmesser A auf. Ferner ist an dem geschlossenen kugeligen Teil 71 ein Griff 73 angebracht, um dieses als vorgefertigtes Teil besser handhaben zu können. Gemäß Figur 13 können auch zwei Birnenhälse 72 an das kugelige Teil 71 angeschlossen sein, um zwei Zähne 51 des prothetischen Gerüstes 5 zu entlüften.

Auch diese Zusatzhohlräume 7 bzw. 70 werden in ihrer Größe dem jeweiligen zu entlüftenden Teil 51 angepaßt. Es werden deshalb verschiedene Größen vorgesehen, wobei sich hier auch bestimmte Relationen zwischen dem Durchmesser C des Kugelteils 71 und dem Durchmesser A des Birnenhalses 72 als zweckmäßig erwiesen haben. So soll der Durchmesser C zum Durchmesser A im Verhältnis 1,8 bis 2,5 stehen.

Bei der Zusammensetzung der einzelnen Wachsmodelle um die Gießform herzustellen, werden die vorgefertigten Teile 7 oder 70 mit dem prothetischen Gerüst 5 verbunden, die Griffe 73 werden anschließend abgetrennt und entfernt. Das Wachsmodell wird dann, wie üblich, in die Gießmuffel eingebracht und mit entsprechender Formmasse umgeben. Dabei ist, wie im Zusammenhang mit Fig. 14 oben beschrieben, auf die richtige Lage des Modells in der Gießmuffel 1 zu achten. Die Zusatzhohlräume 7 oder 70 sollen möglichst zum Zentrum der Gießmuffel 1 hin angeordnet sein, damit die Schmelze dort später als im prothetischen Gerüst erstarrt. Nach dem Erstarren der Formmasse derselben wird das Wachs aus der Form ausgeschmolzen, die nun die gewünschten Hohlräume für das prothetische Gerüst 5 als auch für die Gießkanäle 40, 400 und Zusatzhohlräume 7, 70 aufweist.

### Bezugszeichenliste

- 1: Gießmuffel, Gießform
- 2: Gußbalken
- 3: Gießtrichter
- 4, 40, 400: Gießkanal
- 5: zahnprothetisches Gerüst,
zahnprothetischer Hohlraum
- 51: Zahn, Krone, Zwischenglied
- 52: Verbindungsglied
- 7, 70: Zusatzhohlraum
- 71: kugelförmige Erweiterung
- 72: Birnenhals
- 73: Griff, Ansatz
- 42, 402: trichterförmige Mündung
- 41: kugelförmige Erweiterung
- 8: Verbindungskanal
- A: Durchmesser am Anschluß an prothetisches Gerüst
- B: Durchmesser Gießkanal
- C: Durchmesser kugelförmige Erweiterung

## Patentansprüche

1. Verfahren zum Herstellen von prothetischem Zahnersatz durch Vergießen von Metall-Legierungen in Gießformen, die einen Hohlraum zur Aufnahme der Schmelze für den prothetischen Zahnersatz aufweisen sowie jeweils mindestens einen Einfülltrichter, von dem aus die Schmelze in Gießkanälen an verschiedene Stellen des zu gießenden prothetischen Zahnersatzes geleitet wird, **dadurch gekennzeichnet, daß** die im Hohlraum der Form (1) eingeschlossene Luft durch das Einschießen der Schmelze in geschlossene Zusatzhohlräume (7, 70) gedrückt wird, die außerhalb des für den prothetischen Zahnersatz (5) vorgesehenen Hohlraumes liegen und entgegen der Richtung der Schwerkraft angeordnet sind.

2. Verfahren nach Anspruch 1., **dadurch gekennzeichnet, daß** die Schmelze jeweils zwischen zwei Zusatzhohlräumen (7, 70) zugeführt wird.

3. Verfahren nach einem oder mehreren der vorstehenden Ansprüche, **dadurch gekennzeichnet, daß** die zugeführte Schmelze unmittelbar vor dem Eintritt in den zahnprothetischen Hohlraum (5) trichterartig zusammengefaßt wird.

4. Verfahren nach einem oder mehreren der vorstehenden Ansprüche, **dadurch gekennzeichnet, daß** die Zusammenfassung der Schmelze vor dem zahnprothetischen Hohlraum (5) bezogen auf den Gießkanaldurchmesser (B) in einem Verhältnis 1,3 bis 1,8 erfolgt.

5. Verfahren nach einem oder mehreren der vorstehenden Ansprüche, **dadurch gekennzeichnet, daß** die einströmende Schmelze vor dem Eintritt in den zahnprothetischen Hohlraum (5) eine Erweiterung (41) des Gießkanales (40) durchströmt, bevor sie auf einen Querschnitt zusammengefaßt wird, der kleiner als der des Gießkanals (40) ist.

6. Verfahren nach einem oder mehreren der vorstehenden Ansprüche, **dadurch gekennzeichnet, daß** die Zusammenfassung (42) der Schmelze unmittelbar vor den zahnprothetischen Hohlraum (5) bezogen auf den Gießkanaldurchmesser im Verhältnis 1,15 bis 1,6 erfolgt.

7. Verfahren nach einem oder mehreren der vorstehenden Ansprüche, **dadurch gekennzeichnet, daß** die Größe und/oder Anzahl der Zusatzhohlräume (7, 70) nach der Größe des zu entlüftenden prothetischen Hohlraumes (5) bestimmt wird.

8. Vorrichtung zur Durchführung des Verfahrens nach einem oder mehreren der vorstehenden Ansprüche, **dadurch gekennzeichnet, daß** an mindestens einem Zahn (51) des zahnprothetischen Hohlraumes (5) entgegen der Richtung der Schwerkraft ein Zusatzhohlraum (7, 70) angeschlossen ist zur Aufnahme der durch das Einschießen der Schmelze in den prothetischen Hohlraum (5) verdrängten Luft.

9. Vorrichtung nach einem oder mehreren der vorstehenden Ansprüche, **dadurch gekennzeichnet, daß** an den zahnprothetischen Hohlraum (5) im Wechsel Gießkanäle (40, 400) und Zusatzhohlräume (7, 70) angeschlossen sind.

10. Vorrichtung nach einem oder mehreren der vorstehenden Ansprüche, **dadurch gekennzeichnet, daß** der Zusatzhohlraum (7, 70) birnenförmig ausgebildet ist, wobei der Birnenhals (72) an den zahnprothetischen Hohlraum (5) angeschlossen ist.

11. Vorrichtung nach Anspruch 10, **dadurch gekennzeichnet, daß** der birnenförmige Zusatzhohlraum (7, 70) aus dem Birnenhals (72) und einer kugelförmigen Erweiterung (71) besteht, deren Durchmesser (C) zum Durchmesser (A) des Birnenhalses (72) im Verhältnis 1,8 bis 2,5 steht.

12. Vorrichtung nach einem oder mehreren der vorstehenden Ansprüche, **dadurch gekennzeichnet, daß** der Zusatzhohlraum (7, 70) als vorgefertigtes Modellteil für die Herstellung der Gußform ausgebildet ist.

13. Vorrichtung nach Anspruch 12, **dadurch gekennzeichnet, daß** das vorgefertigte Modellteil des Zusatzhohlraumes (7, 70) einen Ansatz (73) zur Handhabung aufweist.

14. Vorrichtung nach einem oder mehreren der vorstehenden Ansprüche, **dadurch gekennzeichnet, daß** der Gießkanal (40, 400) eine trichterförmige Mündung (42, 402) aufweist.

15. Vorrichtung nach einem oder mehreren der vorstehenden Ansprüche, **dadurch gekennzeichnet, daß** der Gießkanal (40) eine Erweiterung (41) vor der trichterförmigen Mündung (42) aufweist.

16. Vorrichtung nach Anspruch 15, **dadurch gekennzeichnet, daß** die Erweiterung (41) kugelförmig ausgebildet ist.

17. Vorrichtung nach einem der Ansprüche 15 oder 16, **dadurch gekennzeichnet, daß** der Durchmesser (C) der Erweiterung (41) etwa das 1,7- bis 2,3-Fache des Durchmessers (A) der trichterförmigen Mündung (42) beträgt.

18. Vorrichtung nach einem oder mehreren der vorstehenden Ansprüche, **dadurch gekennzeichnet, daß** der Gießkanal (40, 400) als vorgefertigtes Teil ausgeführt ist.
